# EUROPEAN PATENT SPECIFICATION

(11) **EP 4 364 992 B1**
(45) Date of publication and mention of the grant of the patent: **08.04.2026**
(21) Application number: 22851663.9
(22) Date of filing: 16.05.2022
(51) Int. Cl.: B60K 17/04, B60K 17/06, H02K 7/116, F16H 57/00, F16H 57/021

(54) **ELECTRIC DRIVE ASSEMBLY FOR VEHICLE AND NEW ENERGY VEHICLE**
ELEKTRISCHE ANTRIEBSANORDNUNG FÜR EIN FAHRZEUG UND NEUENERGIEFAHRZEUG
ENSEMBLE D'ENTRAÎNEMENT ÉLECTRIQUE POUR VÉHICULE ET VÉHICULE À ÉNERGIE NOUVELLE

(30) Priority: 03.08.2021 CN 202121795227 U
(43) Date of publication of application: 08.05.2024
(73) Proprietor: Jing-Jin Electric Technologies Co., Ltd., Beijing 100015 (CN)
(72) Inventor: YU, Ping, Beijing 100015 (CN); LIU, Yang, Beijing 100015 (CN); PAN, Fayu, Beijing 100015 (CN); LI, Jianwen, Beijing 100015 (CN); LIU, Huaijin, Beijing 100015 (CN)
(74) Representative: Studio Torta S.p.A.
(86) International application number: PCT/CN2022/093086
(87) International publication number: WO 2023/010945

(56) References cited:
- EP-A1- 4 361 470
- CN-A- 110 203 058
- CN-U- 207 955 335
- CN-U- 208 221 552
- CN-U- 209 208 450
- CN-U- 213 270 889
- CN-U- 215 921 885
- US-A1- 2020 391 588

## Description

### CROSS REFERENCING OF RELATED APPLICATIONS

This application claims priority from the Chinese patent application No. 202121795227.1 filed with the Chinese Patent Office on August 3, 2021 and entitled "VEHICLE ELECTRIC DRIVE ASSEMBLY AND NEW ENERGY VEHICLE".

### TECHNICAL FIELD

The present invention belongs to the field of electric drive assembly technology, and particularly relates to a vehicle electric drive assembly and a new energy vehicle.

### BACKGROUND

At present, among the driving methods of new energy vehicles, one type is a single motor direct driving method, in which a single drive motor directly drives the vehicle's transmission shaft, and there is not a reducer for reducing speed and increasing torque. When it is required that the motor not only meets the high torque power output needs of the entire vehicle, but also meets the economic needs of high-speed driving of the entire vehicle, only low speed and high torque drive motors can be selected. However, this type of drive motor generally has a larger contour and volume and requires higher costs for magnetic steel and coils. Therefore, the single motor direct driving method generally has the problems of large motor volume and high manufacturing cost. Another type of driving method uses a low speed and high torque drive motor and a small speed ratio reducer. Compared with the single motor direct driving method, this driving method reduces the contour and volume of the drive motor to a certain extent, but it also has the problems of large motor volume and high cost; moreover, the function of the reducer for reducing speed and increasing torque is not fully realized.

CN110203058A discloses a wheel hub electric drive assembly of a parallel shaft reducer. The wheel hub electric drive assembly comprises a driving mechanism, a deceleration mechanism and a wheel hub, wherein the driving mechanism inputs power to the deceleration mechanism, the deceleration mechanism inputs power to the wheel hub through a flange, to drive a vehicle to run, the output shafts of the driving mechanism and the deceleration mechanism are on the same center line, and the shells of the driving mechanism and the deceleration mechanism are of an integrated structure.

### SUMMARY

With respect to the above problems, the present invention provides a vehicle electric drive assembly and a new energy vehicle in order to overcome or at least partially solve the above problems.

In order to achieve the above object, the present invention adopts the following technical solutions.

An aspect of the present invention provides a vehicle electric drive assembly, wherein the electric drive assembly comprises a motor and a reducer;
the motor comprises a motor shaft, and the reducer comprises an input shaft, an intermediate shaft, and an output shaft;
the input shaft is fixedly connected to the motor shaft, the output shaft and the input shaft are coaxially provided, the intermediate shaft is provided parallel to the input shaft and the output shaft, and the input shaft drives the output shaft to rotate through the intermediate shaft.

Further, the motor shaft and the input shaft are integrally formed.

Further, the input shaft and the output shaft are connected through a bearing.

Further, an output flange is provided on the output shaft.

Further, a first gear is provided on the input shaft, a second gear and a third gear are provided on the intermediate shaft, and a fourth gear is provided on the output shaft; and
the first gear and the second gear are meshed for transmission, and the third gear and the fourth gear are meshed for transmission.

Further, the maximum speed of the motor is not less than 16,000 rpm.

Further, the reducer is provided therein with an oil baffle or an oil retaining rib.

Further, the motor comprises a front housing of motor and a rear housing of motor, and the reducer comprises a front housing of reducer and a rear housing of reducer; and
the front housing of reducer and the rear housing of motor are integrally formed.

Further, a coolant groove is integrated at a bottom of the front or rear housing of reducer, and the coolant groove is used to cool lubricating oil inside the reducer.

Another aspect of the present invention provides a new energy vehicle comprising the electric drive assembly as described above.

The advantages and beneficial effects of the present invention are as follows.

In the vehicle electric drive assembly of the present invention, the input shaft of the reducer is fixedly connected to the motor shaft, the output shaft and the input shaft of the reducer are coaxially provided, the intermediate shaft is provided parallel to the input shaft and the output shaft, so that the input shaft drives the output shaft to rotate through the intermediate shaft. The electric drive assembly has the advantages of compact structure, simple manufacturing, low cost, high performance, and small space occupation.

### BRIEF DESCRIPTION OF DRAWINGS

By reading the detailed description of the preferred embodiments below, various other advantages and benefits will become clear to a person of ordinary skill in the art. The accompanying drawings are only used for the purpose of illustrating the preferred embodiments, and should not be considered as a limitation to the present invention. Moreover, throughout the drawings, the same reference numerals are used to denote the same components. In the drawings:

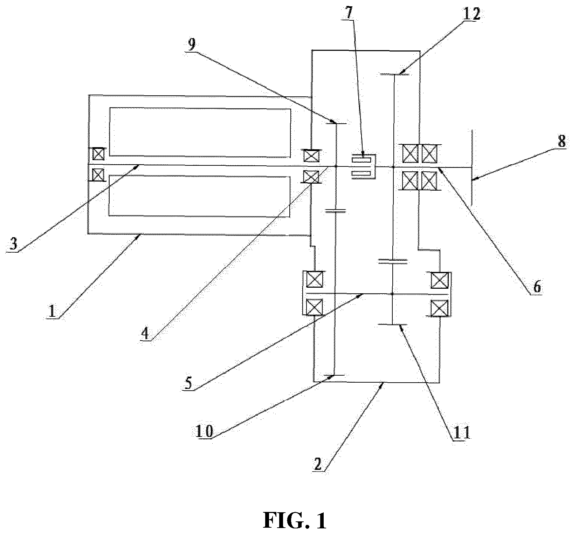

FIG. 1 is a schematic diagram of the structure of a vehicle electric drive assembly according to an embodiment of the present invention.

In the drawings: 1. motor; 2. reducer; 3. motor shaft; 4. input shaft; 5. intermediate shaft; 6. output shaft; 7. bearing; 8. output flange; 9. first gear; 10. second gear; 11. third gear; 12. fourth gear.

### DETAILED DESCRIPTION

In order to make the object, technical solutions, and advantages of the present invention clearer, the present invention will be described clearly and completely in conjunction with the specific embodiments and corresponding drawings. Obviously, the embodiments described are only part of rather than all of the embodiments of the present invention. Based on the embodiments in the present invention, all other embodiments obtained by a person of ordinary skill in the art without paying creative work shall fall within the protection scope of the present invention.

The technical solutions provided in embodiments of the present invention will be explained in detail below in conjunction with the accompanying drawings.

In an embodiment of the present invention, a vehicle electric drive assembly is disclosed. As shown in FIG. 1, the electric drive assembly comprises a motor 1 and a reducer 2. The motor 1 comprises a motor shaft 3. The reducer 2 comprises an input shaft 4, an intermediate shaft 5, and an output shaft 6.

Specifically, the input shaft 4 is fixedly connected to the motor shaft 3, the output shaft 6 and the input shaft 4 are coaxially provided, the intermediate shaft 5 is provided parallel to the input shaft 4 and the output shaft 6, and the input shaft 4 drives the output shaft 6 to rotate through the intermediate shaft 5, thereby making the structure of the reducer 2 more compact. The motor 1 outputs power through the reducer 2, thereby achieving the function of speed reducing and torque increasing, and thus improving the output torque of the electric drive assembly and meeting the high torque power output requirements of the vehicle.

The power output path of the electric drive assembly is as follows: the power of the motor 1 is transferred through the motor shaft 3 to the input shaft 4; the input shaft 4 drives the intermediate shaft 5 to rotate and then drives the output shaft 6 to rotate; finally, the power is output through the output shaft 6.

In sum, in the vehicle electric drive assembly of this embodiment, the input shaft of the reducer is fixedly connected to the motor shaft, the output shaft and the input shaft of the reducer are coaxially provided, and the intermediate shaft is provided parallel to the input shaft and the output shaft, so that the input shaft drives the output shaft to rotate through the intermediate shaft. The electric drive assembly has the advantages of compact structure, simple manufacturing, low cost, high performance, and small space occupation.

In an embodiment, as shown in FIG. 1, the motor shaft 3 and the input shaft 4 are integrally formed. The integrated design not only makes the transmission structure of the electric drive assembly more compact to meet the high centering and high dynamic balance requirements for motor shaft 3 when rotating at a high speed, but also reduces power loss during power transmission and improves transmission efficiency. To a certain extent, it also improves the NVH (noise, vibration, harshness) performance of the electric drive assembly and reduces the manufacturing cost of the electric drive assembly.

In an embodiment, as shown in FIG. 1, the input shaft 4 and the output shaft 6 are connected through a bearing 7, which can achieve relative fixation of the input shaft 4 and the output shaft 6, and prevent instability of the input shaft 4 and the output shaft 6 during rotation. Moreover, any additional fixing structure is not needed to fix the input shaft 4 and the output shaft 6, so that the structure of the electric drive assembly is simpler.

Furthermore, an output flange 8 is provided on the output shaft 6 for fixed connection with the transmission shaft on the vehicle, so that the output shaft 6 transmits power to the transmission shaft on the vehicle through the output flange 8. Of course, alternatively, a coupling may be installed on the output shaft 6, and the output shaft 6 is connected to the transmission shaft on the vehicle through the coupling, which is also within the protection scope of the present invention.

In one or some embodiments, as shown in FIG. 1, a first gear 9 is provided on the input shaft 4, a second gear 10 and a third gear 11 are provided on the intermediate shaft 5, and a fourth gear 12 is provided on the output shaft 6.

The first gear 9 and the second gear 10 are meshed for transmission; the third gear 11 and the fourth gear 12 are meshed for transmission. By adjusting the transmission ratio between gears based on the performance of the vehicle and the motor, it is possible to achieve high transmission speed ratio of the reducer, and further improve the output torque of the electric drive assembly.

In an embodiment, the maximum speed of the motor is not less than 16,000 rpm, and the specific model of the motor can be determined based on the type of vehicle used, the power performance and economic requirements of the motor, as well as the transmission speed ratio of the reducer. For example, when the type of vehicle is a low-speed, high-power off-road vehicle, the maximum motor speed of 16,000 rpm can meet the demand.

In this embodiment, the motor is a high speed and low torque drive motor, and has the advantages of small size, light weight, low cost, and high power density. When cooperated with the large transmission speed ratio reducer mentioned above, compared with the conventional electric drive assembly with the same maximum power and maximum torque, the volume of the electric drive assembly in this embodiment is smaller by about 20%, especially the electric drive assembly is reduced by about 10% to 15% in height and width, and the weight is reduced by about 5% to 10%, which facilitates the spatial arrangement of the electric drive assembly within the vehicle.

In one or some embodiments, the reducer is provided therein with an oil baffle or an oil retaining rib, which can reduce the amount of lubricating oil splashed by the reducer gear during rotation, thereby reducing the power loss caused by the reducer gear stirring oil.

In an embodiment, the motor comprises a front housing of motor and a rear housing of motor; the reducer comprises a front housing of reducer and a rear housing of reducer.

In order to improve the integration of the reducer, reduce the axial length and mass of the reducer, and reduce the manufacturing cost of the electric drive assembly, the front housing of reducer and the rear housing of motor are integrally formed.

In an embodiment, in order to improve the heat dissipation performance of the reducer and thereby enhance the overall performance of the electric drive assembly, a coolant groove is integrated at the bottom of the front or rear housing of reducer. The coolant groove is used to cool the lubricating oil inside the reducer. The coolant flows through the coolant groove and can quickly remove the heat inside the reducer.

In an embodiment of the present invention, a new energy vehicle is disclosed. The new energy vehicle comprises an electric drive assembly described in any of the above embodiments, and has the advantages of low cost, excellent NVH performance, high efficiency, and high reliability.

The above merely describes particular embodiments of the present invention. By the teaching of the present invention, a person skilled in the art can make other modifications or variations based on the above embodiments. A person skilled in the art should appreciate that, the detailed description above is only for the purpose of better explaining the present invention, and the protection scope of the present invention should be subject to the protection scope of the claims.

## Claims

1. A vehicle electric drive assembly comprising a motor (1) and a reducer (2);
the motor (1) comprises a motor shaft (3), and the reducer (2) comprises an input shaft (4), an intermediate shaft (5), and an output shaft (6);
the input shaft (4) is fixedly connected to the motor shaft (3), the output shaft (6) and the input shaft (4) are coaxially provided, the intermediate shaft (5) is provided parallel to the input shaft (4) and the output shaft (6), and the input shaft (4) drives the output shaft (6) to rotate through the intermediate shaft (5);
the motor (1) comprises a front housing of motor (1) and a rear housing of motor (1), and the reducer (2) comprises a front housing of reducer (2) and a rear housing of reducer (2); and the front housing of reducer (2) and the rear housing of motor (1) are integrally formed;
**characterized in that** a coolant groove is integrated at a bottom of the front housing of reducer (2), and the coolant groove is used to cool lubricating oil inside the reducer (2).

2. The electric drive assembly according to claim 1, **characterized in that**: the motor shaft (3) and the input shaft (4) are integrally formed.

3. The electric drive assembly according to claim 1, **characterized in that**: the input shaft (4) and the output shaft (6) are connected through a bearing (7).

4. The electric drive assembly according to claim 1, **characterized in that**: an output flange (8) is provided on the output shaft (6).

5. The electric drive assembly according to claim 1, **characterized in that**: a first gear (9) is provided on the input shaft (4), a second gear (10) and a third gear (11) are provided on the intermediate shaft (5), and a fourth gear (12) is provided on the output shaft (6); and
the first gear (9) and the second gear (10) are meshed for transmission, and the third gear (11) and the fourth gear (12) are meshed for transmission.

6. An electric drive assembly according to any one of claims 1-5, **characterized in that**: the maximum speed of the motor (1) is not less than 16,000 rpm.

7. An electric drive assembly according to any one of claims 1-5, **characterized in that**: the reducer (2) is provided therein with an oil baffle or an oil retaining rib.

8. A new energy vehicle **characterized by** comprising the electric drive assembly according to any one of claims 1-7.

## Patentansprüche

1. Elektrische Fahrzeugantriebsanordnung, umfassend einen Motor (1) und ein Untersetzungsgetriebe (2);
wobei der Motor (1) eine Motorwelle (3) umfasst und das Untersetzungsgetriebe (2) eine Eingangswelle (4), eine Zwischenwelle (5) und eine Ausgangswelle (6) umfasst;
wobei die Eingangswelle (4) mit der Motorwelle (3) fest verbunden ist, die Ausgangswelle (6) und die Eingangswelle (4) koaxial bereitgestellt sind, die Zwischenwelle (5) parallel zu der Eingangswelle (4) und der Ausgangswelle (6) bereitgestellt ist, und die Eingangswelle (4) die Ausgangswelle (6) antreibt, sich zu drehen, über die Zwischenwelle (5);
wobei der Motor (1) ein vorderes Gehäuse des Motors (1) und ein hinteres Gehäuse des Motors (1) umfasst und das Untersetzungsgetriebe (2) ein vorderes Gehäuse des Untersetzungsgetriebes (2) und ein hinteres Gehäuse des Untersetzungsgetriebes (2) umfasst; und wobei das vordere Gehäuse des Untersetzungsgetriebes (2) und das hintere Gehäuse des Motors (1) einstückig ausgebildet sind;
**dadurch gekennzeichnet, dass**
eine Kühlmittelnut an einem Boden des vorderen Gehäuses des Untersetzungsgetriebes (2) integriert ist, und die Kühlmittelnut verwendet wird, um Schmieröl innerhalb des Untersetzungsgetriebes (2) zu kühlen.

2. Elektrische Antriebsanordnung nach Anspruch 1,
**dadurch gekennzeichnet, dass:** die Motorwelle (3) und die Eingangswelle (4) einstückig ausgebildet sind.

3. Elektrische Antriebsanordnung nach Anspruch 1,
**dadurch gekennzeichnet, dass:** die Eingangswelle (4) und die Ausgangswelle (6) durch ein Lager (7) verbunden sind.

4. Elektrische Antriebsanordnung nach Anspruch 1,
**dadurch gekennzeichnet, dass:** ein Ausgangsflansch (8) an der Ausgangswelle (6) bereitgestellt ist.

5. Elektrische Antriebsanordnung nach Anspruch 1,
**dadurch gekennzeichnet, dass:** ein erstes Zahnrad (9) auf der Eingangswelle (4) bereitgestellt ist, ein zweites Zahnrad (10) und ein drittes Zahnrad (11) auf der Zwischenwelle (5) bereitgestellt sind, und ein viertes Zahnrad (12) auf der Ausgangswelle (6) bereitgestellt ist; und
das erste Zahnrad (9) und das zweite Zahnrad (10) für eine Übertragung ineinandergreifend sind, und das dritte Zahnrad (11) und das vierte Zahnrad (12) für die Übertragung ineinandergreifend sind.

6. Elektrische Antriebsanordnung nach einem der Ansprüche 1 bis 5, **dadurch gekennzeichnet, dass:** die maximale Drehzahl des Motors (1) nicht weniger als 16.000 U/min beträgt.

7. Elektrische Antriebsanordnung nach einem der Ansprüche 1 bis 5, **dadurch gekennzeichnet, dass:** das Untersetzungsgetriebe (2) darin mit einem Ölfänger oder einer Ölrückhalterippe versehen ist.

8. Neuenergiefahrzeug, **dadurch gekennzeichnet, dass** es die elektrische Antriebsanordnung nach einem der Ansprüche 1 bis 7 umfasst.

## Revendications

1. . Ensemble d'entraînement électrique de véhicule comprenant un moteur (1) et un réducteur (2) ;
le moteur (1) comprend un arbre de moteur (3), et le réducteur (2) comprend un arbre d'entrée (4), un arbre intermédiaire (5) et un arbre de sortie (6) ;
l'arbre d'entrée (4) est relié de manière fixe à l'arbre de moteur (3), l'arbre de sortie (6) et l'arbre d'entrée (4) sont fournis de manière coaxiale, l'arbre intermédiaire (5) est fourni parallèlement à l'arbre d'entrée (4) et à l'arbre de sortie (6), et l'arbre d'entrée (4) entraîne l'arbre de sortie (6) en rotation à travers l'arbre intermédiaire (5) ;
le moteur (1) comprend un boîtier avant de moteur (1) et un boîtier arrière de moteur (1), et le réducteur (2) comprend un boîtier avant de réducteur (2) et un boîtier arrière de réducteur (2) ; et le boîtier avant du réducteur (2) et le boîtier arrière du moteur (1) sont formés d'un seul tenant ;
**caractérisé en ce que**
une rainure de liquide de refroidissement est intégrée au fond du boîtier avant du réducteur (2), et la rainure de liquide de refroidissement est utilisée pour refroidir l'huile lubrifiante à l'intérieur du réducteur (2).

2. . Ensemble d'entraînement électrique selon la revendication 1,
**caractérisé en ce que :** l'arbre de moteur (3) et l'arbre d'entrée (4) sont formés d'un seul tenant.

3. . Ensemble d'entraînement électrique selon la revendication 1,
**caractérisé en ce que :** l'arbre d'entrée (4) et l'arbre de sortie (6) sont reliés par le biais d'un palier (7).

4. . Ensemble d'entraînement électrique selon la revendication 1, **caractérisé en ce que :** une bride de sortie (8) est prévue sur l'arbre de sortie (6).

5. . Ensemble d'entraînement électrique selon la revendication 1,
**caractérisé en ce que :** un premier engrenage (9) est prévu sur l'arbre d'entrée (4), un deuxième engrenage (10) et un troisième engrenage (11) sont prévus sur l'arbre intermédiaire (5), et un quatrième engrenage (12) est prévu sur l'arbre de sortie (6) ; et
le premier engrenage (9) et le deuxième engrenage (10) sont engrenés pour la transmission, et le troisième engrenage (11) et le quatrième engrenage (12) sont engrenés pour la transmission.

6. . Ensemble d'entraînement électrique selon l'une quelconque des revendications 1 à 5, **caractérisé en ce que :** la vitesse maximale du moteur (1) n'est pas inférieure à 16 000 tr/min.

7. . Ensemble d'entraînement électrique selon l'une quelconque des revendications 1 à 5, **caractérisé en ce que :** le réducteur (2) est pourvu d'un déflecteur d'huile ou d'une nervure de rretenue d'huile.

8. . Véhicule à énergie nouvelle, **caractérisé en ce qu'il** comprend l'ensemble d'entraînement électrique selon l'une quelconque des revendications 1 à 7.
